(19) **Europäisches Patentamt / European Patent Office / Office européen des brevets**

(11) **EP 2 028 810 B1**

(12) **FASCICULE DE BREVET EUROPEEN**

(45) Date de publication et mention
de la délivrance du brevet:
**26.10.2011 Bulletin 2011/43**

(51) Int Cl.:
***H04L 27/36*** *(2006.01)*

(21) Numéro de dépôt: **08162864.6**

(22) Date de dépôt: **22.08.2008**

(54) **Correction de distorsions dans une chaîne d'émission**

Korrektur von Verzerrungen in einem Sender

Correction of distortions in a transmission chain

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **23.08.2007 FR 0705980**

(43) Date de publication de la demande:
**25.02.2009 Bulletin 2009/09**

(73) Titulaire: **EADS Secure Networks
78990 Elancourt (FR)**

(72) Inventeurs:
• **Mege, Philippe
92340, BOURG LA REINE (FR)**
• **Brutel, Christophe
06800, CAGNES (FR)**
• **Le Gal, Pierre-Yves
78390, BOIS D'ARCY (FR)**

**Description**

La présente invention se rapporte à une chaîne d'émission pour transmission radio dans laquelle des distorsions du signal à traiter sont introduites, et plus particulièrement à la correction de certaines de ces distorsions.

Certaines chaînes d'émission sont adaptées pour recevoir un signal d'entrée, puis le décomposer en au moins une première et une seconde composante de signal qui suivent au moins en partie, sous une forme analogique, chacune une voie physique différente et subissent éventuellement des traitements différents, avant que ces deux composantes de signal ainsi traitées de manière parallèle ne soient combinées pour fournir un signal à émettre.

Les différentes voies physiques parcourues peuvent induire des retards différents sur chacune des composantes de signal ainsi traitées de manière parallèle. En plus de ces retards différentiels, le fait que les différentes composantes de signal suivent des voies physiques différentes peut générer des distorsions supplémentaires telles que par exemple des différences de gain, ou des différences de phase, ou encore tout autre type de distorsion, entre ces différentes composantes du signal à émettre.

Ces différentes distorsions de signal potentielles sont susceptibles de dégrader les caractéristiques du signal émis, comme par exemple le spectre de fréquence du signal émis. Elles sont également susceptibles d'avoir un impact sur les performances d'un récepteur adapté pour recevoir le signal émis par la chaîne d'émission.

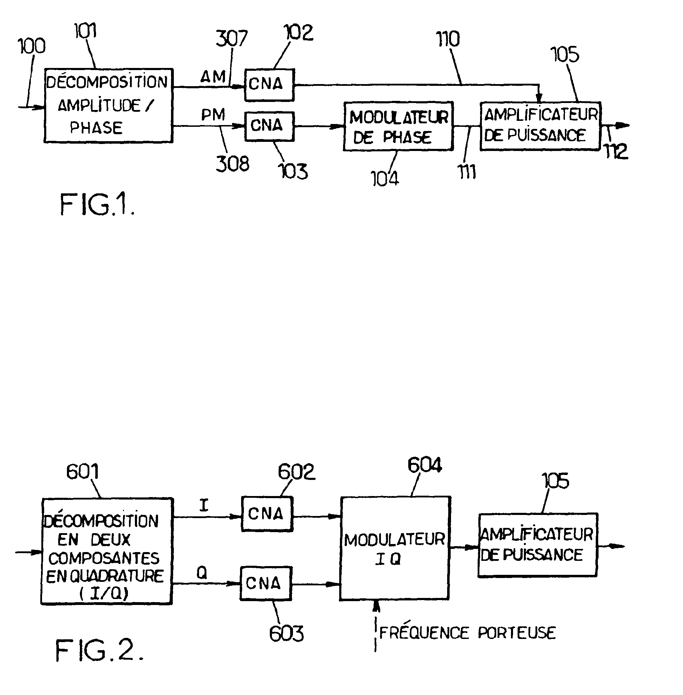

La figure 1 illustre un exemple d'une telle chaîne d'émission qui comprend un module de décomposition de signal 101 adapté pour recevoir un signal numérique d'entrée 100 fourni par un modulateur, et pour fournir, d'une part, une première composante 307 de signal, correspondant ici à une composante de modulation d'amplitude (AM) et, d'autre part, une seconde composante 308 de signal, correspondant à une composante de modulation de phase (PM).

Ces première et seconde composantes de signal sont respectivement traitées de manière parallèle. Les première et seconde sorties du module de décomposition de signal 101 sont reliées respectivement à deux convertisseurs numérique analogique 102 et 103. Une sortie du convertisseur numérique analogique 103 est reliée à un modulateur de phase 104. Ce dernier est adapté pour moduler un signal d'entrée selon une fréquence porteuse.

Cette chaîne d'émission comprend un amplificateur de puissance 105 qui est adapté pour recevoir, d'une part, sur une première entrée un signal 110 fourni en sortie du convertisseur numérique analogique 102 relatif à la composante d'amplitude du signal d'entrée 100, et, d'autre part, sur une seconde entrée un signal 111 fourni en sortie du modulateur de phase 104 relatif à la composante de phase du signal d'entrée 100.

Les première et seconde entrées de l'amplificateur de puissance peuvent respectivement correspondre aux entrées drain et grille de cet amplificateur de puissance.

Puis, en sortie de cet amplificateur de puissance, un signal à émettre 112 par la chaîne d'émission est ainsi obtenu à partir des deux composantes de signal précédemment citées.

Ici, on peut notamment noter qu'un retard entre ces deux composantes du signal à émettre peut induire une dégradation du spectre de ce signal 112.

La figure 2 fournit un autre exemple d'une partie d'une chaîne d'émission dans laquelle le signal à transmettre est décomposé en deux composantes de signal selon une décomposition dite « en quadrature ».

Cette chaîne d'émission comprend un module de décomposition 601 d'un signal reçu en entrée, en des première et seconde composantes de signal en quadrature de phase, respectivement I et Q. Le signal est donc représenté sous forme complexe, les parties réelle et imaginaire formant les deux composantes en quadrature du signal.

Ce module de décomposition 601 présente une première voie de sortie qui fournit la première composante 1 en entrée d'un premier convertisseur numérique-analogique 602 et une seconde voie de sortie qui fournit la seconde composante Q à un second convertisseur numérique-analogique 603. En sortie de ces convertisseurs analogique-numérique, les première et seconde composantes analogiques de signal en quadrature sont traitées par un modulateur I/Q 604 de telle sorte qu'elles sont transposées à la fréquence porteuse. Après ce traitement de modulation, le signal est alors fourni en entrée, ou plus précisément sur la grille, d'un amplificateur de puissance 105, ce dernier étant adapté pour fournir un signal à émettre.

Dans une telle architecture, des distorsions peuvent être induites par les convertisseurs numérique-analogique 602 et 603, ainsi que par le modulateur IQ 604. Ces convertisseurs, ce modulateur IQ, avec les voies physiques différentes parcourues par les deux composantes analogiques, peuvent introduire un retard entre les composantes I et Q dans le signal obtenu en sortie du modulateur IQ.

Il peut également apparaître dans ce type d'architecture de chaîne d'émission un défaut relatif à une mauvaise balance (ou 'imbalance' en anglais), ce défaut étant basé sur une différence entre les gains des deux voies I et Q.

On peut également détecter un défaut de quadrature, les composantes de signal I et Q n'étant pas parfaitement en quadrature.

La présente invention vise à améliorer la situation dans différents cas, notamment comme ceux illustrés par les deux exemples décrits précédemment.

Une structure de chaîne d'émission, telle que celle illustrée par les exemples ci-dessus, est connue de l'homme du métier. Sur la base de la connaissance de cette structure, on est avantageusement en mesure de corriger des distorsions qui sont inhérentes à cette structure grâce à un prétraitement numérique. Un tel prétraitement numérique permet de corriger et d'obtenir en sortie de l'amplificateur de puissance de la chaine d'émission, un signal radio correspondant au signal que l'on souhaite transmettre et présentant des performances améliorées notamment en ce qui concerne la distorsion du spectre de fréquence.

Un document de l'état de la technique est la demande de brevet EP1808959 qui concerne un dispositif pour la diminution de la distorsion au transmetteur parmi l'alignement des composantes de phase et d'amplitude de la chaîne d'émission. Le dispositif produit une comparaison entre le signal d'entrée retardé et le signal de sortie pour déterminer les instructions de retard.

Un premier aspect de la présente invention propose les procédés de traitement d'un signal dans une chaîne d'émission adaptée des revendications 1 et 2.

Grâce à de telles dispositions, on est en mesure d'obtenir un signal à fournir en entrée de l'amplificateur qui est corrigé de certaines perturbations induites par la structure de la chaîne d'émission considérée. En effet, en appliquant des retards aux composantes du signal numérique d'entrée avant de les envoyer dans la chaîne émission permet de corriger les retards différentiels induits par l'architecture de la chaîne d'émission considérée.

L'homme du métier sait estimer la valeur maximale que peuvent prendre ces différents premiers retards, sur la base des caractéristiques physiques des composants utilisés sur les différentes voies physiques.

Il sait par conséquent déterminer une valeur du second retard.

On peut avantageusement corriger également les gains correspondants à ces différentes composantes, ou encore leur déphasage relatif, ou toute autre distorsion due à l'architecture de la chaîne d'émission.

Un second aspect de la présente invention propose la chaîne de traitement d'un signal dans une chaine d'émission, des revendications 6 et 7.

D'autres aspects, buts et avantages de l'invention apparaîtront à la lecture des modes de réalisation des revendications dépendantes.

L'invention sera également mieux comprise à l'aide des dessins, sur lesquels :

- la figure 1 illustre une partie d'une chaîne d'émission dans laquelle le signal traité est décomposé en plusieurs composantes de signal, selon une première décomposition de signal en amplitude et en phase ;
- la figure 2 illustre une partie d'une chaîne d'émission dans laquelle le signal traité est décomposé en plusieurs composantes de signal, selon une seconde décomposition de signal en composantes I et Q en quadrature ;
- les figures 3 et 4 illustrent une mise en oeuvre d'une correction de distorsion selon un mode de réalisation de la présente invention dans une architecture telle que celle illustrée en figure 1 ;
- la figure 5 illustre une architecture d'une chaîne d'émission de signal radio selon un mode de réalisation de la présente invention telle qu'illustrée en figure 2 ; et
- la figure 6 illustre une architecture de chaîne d'émission telle que celle illustrée dans la figure 3 dans laquelle on applique en outre une pré-distorsion pour rendre linéaire le fonctionnement de l'amplificateur de puissance.

Les sections suivantes décrivent la mise en oeuvre de la présente invention dans différentes architectures de chaîne d'émission.

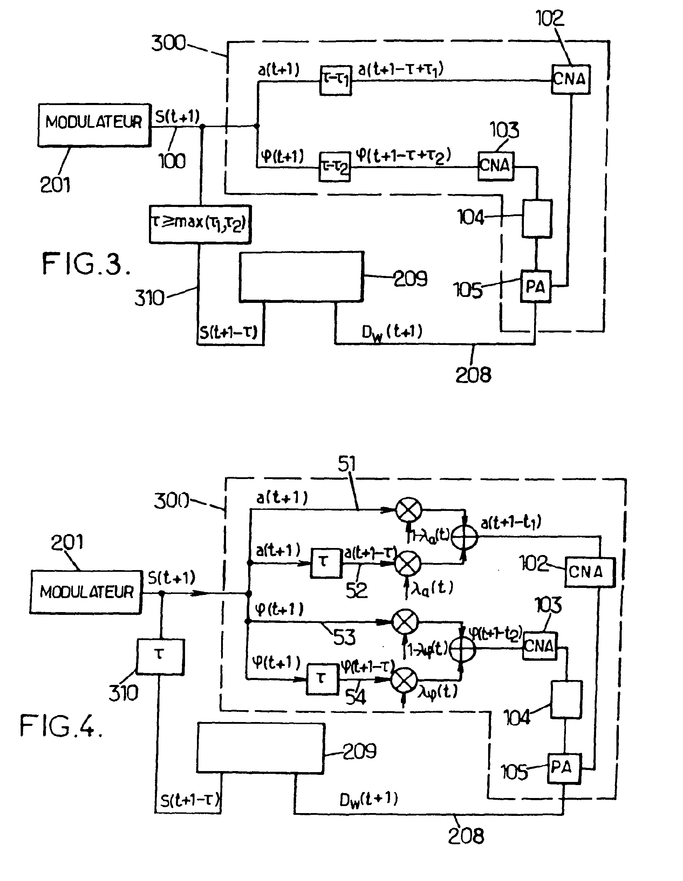

Comme illustré en figure 3, une chaîne de traitement selon un mode de réalisation de la présente invention est adaptée pour recevoir le signal d'entrée 100 et pour fournir le signal à émettre 208. Elle comprend :

- une voie de traitement 300 du signal d'entrée, qui comprend un amplificateur de puissance 105, et qui inclut une décomposition de signal numérique selon N composantes de signal, avec N un nombre entier supérieur ou égal à 2, lesdites N composantes de signal, d'une part, étant converties d'une forme numérique en une forme analogique et, d'autre part, suivant respectivement des voies physiques distinctes, lesdites voies physiques induisant des premiers retards respectifs sur les N composantes de signal ;
- une voie de transmission de signal 310 adaptée pour retarder le signal d'entrée d'un second retard $\tau$ et transmettre le signal d'entrée retardé à une unité de comparaison 209, ledit second retard $\tau$ ayant une valeur supérieure ou égale à la valeur maximale des premiers retards ;
- une voie de retour qui transmet le signal à émettre 208 à ladite unité de comparaison 209.

Dans l'exemple illustré ici, N est égal à 2, et les premiers retards sont référencés $\tau_1$ et $\tau_2$.

Le signal fourni à l'amplificateur de puissance 105 correspond à un signal issu d'une combinaison des N composantes de signal retardées respectivement de N retards de correction $\tau-\tau_i$, pour i compris entre 1 et N, le signal fourni étant obtenu sur la base d'une comparaison entre le signal d'entrée retardé et le signal à émettre effectuée par l'unité de comparaison 209.

Quelque soit le traitement appliqué à un signal d'entrée 100 pour fournir un signal à émettre 208, une chaîne d'émission selon un mode de réalisation de la présente invention présente une voie de traitement 300 de signal d'entrée ainsi que, d'une part, une voie de transmission 310 fournissant le signal d'entrée depuis le modulateur 201 à une unité de comparaison de signaux 209, et, d'autre part, une voie de retour fournissant en entrée de l'unité de comparaison de signaux 209 le signal à émettre 208, vu à travers ladite voie de retour.

L'unité de comparaison de signaux 209 est en charge de déterminer les retards à appliquer sur chacune des composantes de signal afin de corriger les distorsions du signal à émettre qui sont induites par une désynchronisation relative de ces composantes de signal.

La figure 3 illustre une correction de distorsion selon un mode de réalisation de la présente invention dans une architecture de chaîne d'émission telle que celle qui est illustrée en figure 1.

Dans une telle architecture, on prévoit d'appliquer un premier retard de correction $\tau$-$\tau_1$ et un second retard de correction $\tau$-$\tau_2$ sur les première et seconde composantes de signal respectivement, de façon à appliquer une correction relative des composantes de signal et ainsi permettre une recombinaison pertinente de ces composantes de signal.

Après la décomposition du signal en deux composantes de signal, la composante d'amplitude est retardée du premier retard de correction et la composante de phase est retardée du second retard de correction.

En procédant ainsi, le signal à émettre issue de la combinaison des deux composantes de signal peut avantageusement être corrigé des distorsions précitées.

Afin de déterminer une valeur pertinente pour ces premier et second retards de correction, il est prévu d'appliquer un retard $\tau$ sur le signal d'entrée et de comparer le signal d'entrée ainsi retardé avec le signal émis 208 issu d'une recombinaison des composantes de signal traitées, et observé à travers la voie de retour.

La valeur initiale du retard $\tau$ est tout d'abord choisie supérieure ou égale à la valeur maximale que peuvent prendre les premier et second retards, $\tau_1$ et $\tau_2$, qui sont susceptibles d'affecter les première et seconde voies de traitement de la chaîne d'émission considérée.

Ainsi, on prévoit, dans l'architecture d'une chaîne d'émission selon un mode de réalisation de la présente invention, une unité de comparaison de signaux 209 qui reçoit sur une première entrée le signal d'entrée retardé du retard $\tau$ sur la voie de transmission 310 et sur une seconde entrée le signal à émettre 208 observé à travers la voie de retour.

Sur la base de cette comparaison, on est en mesure de déterminer des valeurs respectives pour les premier et second retards de correction.

Les deux composantes numériques du signal sont respectivement corrigées par des retards de $\tau$-$\tau_1$ et de $\tau$-$\tau_2$ dont les valeurs sont issues de l'unité de comparaison de signaux 209 décrite ci-dessus. Ensuite, les composantes numériques sont converties en analogique respectivement par les convertisseurs 102 et 103 et, les signaux analogiques correspondant ne parcourant pas la même voie physique, ces composantes analogiques subissent respectivement un retard de $\tau_1$ pour la première composante analogique et de $\tau_2$ pour la deuxième composante analogique.

Après application des premier et second traitements sur les première et seconde composantes de signal respectivement, on peut écrire les composantes numériques de signal respectivement obtenues et fournies respectivement aux convertisseurs 102 et 103 sous la forme :

$$a\,(t+1-\tau+\tau_1)$$

et

$$\varphi\,(t+1-\tau+\tau_2)$$

Après parcours de leurs voies physiques respectives, les deux composantes qui sont fournies à l'amplificateur de puissance (PA) subissent un retard respectif de $\tau_1$ et $\tau_2$, et donc les composantes appliquées à l'amplificateur de Puissance (PA) sont :

$$a\,(t+1-\tau)$$

et

$$\varphi\,(t+1-\tau)$$

**4**

Ainsi les corrections apportées sur les différentes composantes des signaux numériques permettent d'obtenir des composantes de signaux synchronisées au niveau de l'amplificateur de puissance (PA) et donc un signal émis optimisé.

On suppose que l'on connaît les valeurs maximales que peuvent respectivement prendre les premier et second retards $\tau_1$ et de $\tau_2$ ou encore que l'on a les moyens d'estimer ces valeurs.

Il convient de noter que de ce mode de réalisation, il est aisé d'en déduire un mode de réalisation adapté pour être appliqué à une décomposition amplitude/fréquence. Dans ce cas, il suffit de remplacer le modulateur de phase par un modulateur de fréquence, puisque différents types de modulation angulaire sont équivalents, et notamment une modulation de phase et une modulation de fréquence. Ainsi, ce qui est applicable à un type de modulation angulaire est également applicable à un autre type de modulation angulaire, en particulier un retard sur la composante de modulation de phase d'un signal est équivalent à un retard sur la composante de modulation de fréquence équivalente du même signal.

Pour estimer les retards subis par les composantes de phase et d'amplitude du signal dans la chaîne d'émission, différentes méthodes d'estimation peuvent ici être utilisées.

On peut notamment estimer ces retards de façon itérative en utilisant un algorithme du gradient. Dans ce cas, on peut mettre en oeuvre une interpolation linéaire pour fournir une approximation d'un retard à appliquer sur un signal ou une composante de signal. La figure 4 illustre un tel mode de réalisation.

On peut écrire les équations suivantes :

$$a\big(t-(\tau-\tau_1)\big) \approx a(t).\big(1-\lambda_a(t)\big) + a(t-\tau).\lambda_a(t)$$

et

$$\varphi\big(t-(\tau-\tau_2)\big) \approx \varphi(t).\big(1-\lambda_\varphi(t)\big) + \varphi(t-\tau).\lambda_\varphi(t)$$

où a(t) représente la composante d'amplitude du signal ; et
où $\varphi$(t) représente la composante de phase du signal ; et
où et $\lambda_\varphi$ sont des coefficients d'interpolation linéaire, respectivement des composantes d'amplitude et de phase du signal ; et
où $\tau$ est une valeur de retard constante au moins égale à la plus grande valeur possible des retards $\tau_1$ et $\tau_2$.

Dans un mode de réalisation de la présente invention, les coefficients d'interpolation $\lambda_a(t)$ et $\lambda_\varphi(t)$ prennent des valeurs réelles et sont obtenus en mettant en oeuvre un algorithme du gradient. Comme connu par l'homme du métier, l'application de l'interpolation linéaire telle que définie ci-avant revient à appliquer un retard dont la valeur est comprise entre 0 et $\tau$ sur le signal d'origine.

L'interpolation linéaire citée ci-avant est un cas simple de l'interpolation de Lagrange, telle que décrite dans le document accessible sous http://sal.shs.arizona.edu/~smathur/pubs/Thesis/MathurCh3.pdf.

A la convergence de l'algorithme itératif du gradient on a :

$$\lambda_a \approx (\tau-\tau_1)\big/\tau$$

et

$$\lambda_\varphi \approx (\tau-\tau_2)\big/\tau$$

Sur une première 51 et une deuxième 52 voie de correction est traitée la composante d'amplitude du signal d'entrée et sur une troisième 53 et une quatrième 54 voie de correction est traitée la composante de phase du signal d'entrée.

Sur la première voie de correction 51, est appliqué un coefficient pondérant de correction

(1- $\lambda_a(t)$) à la composante d'amplitude a(t+1).

Sur la deuxième voie de correction 52, est appliqué un retard $\tau$ , puis sur la composante d'amplitude retardée est appliqué un coefficient pondérant de correction $\lambda_a(t)$.

Par sommation de ces première et deuxième voies de correction, on obtient une composante de signal corrigée qui vérifie l'équation suivante :

$$S_{cor.1}(t+1) \approx a\ (t+1-t_1)$$

A la convergence de l'algorithme itératif du gradient, le terme $t_1$ l'équation suivante

$$t_1 = \tau - \tau_1$$

En procédant de manière similaire sur la composante de phase $\varphi\ (t+1)$ relativement aux troisième et quatrième voies de correction du module de correction, on applique un coefficient pondérant de correction $(1-\lambda_\varphi(t))$ sur la troisième voie de correction et on applique un coefficient pondérant de correction $\lambda_\varphi$ à la composante de phase décalée dans le temps avec un retard $\tau$. On obtient ensuite par sommation des signaux issus de la troisième et quatrième voie de correction, une seconde composante de signal corrigée $S_{cor.2}$ qui vérifie l'équation suivante :

$$S_{cor.2} \approx \varphi\ (t+1-t_2)$$

A la convergence de l'algorithme itératif du gradient, le terme $t_2$ l'équation suivante

$$t_2 = \tau - \tau_2$$

Puis, sur la base de ces deux composantes de signal corrigées, on obtient par recombinaison un signal corrigé S'(t). Le signal recombiné vérifie l'équation suivante :

$$S'(t+1) = \left(a\ (t+1)(1-\lambda_a(t)) + a\ (t+1-\tau)\lambda_a(t)\right)e^{\,j.\left(\varphi\ (t+1).(1-\lambda_\varphi(t))+\varphi(t+1-\tau).\lambda_\varphi(t)\right)}$$

S'(t) est similaire au signal d'entrée complexe de l'amplificateur de puissance.

Afin de chercher à minimiser, en fonction de $\lambda_\alpha$ et $\lambda_\varphi$, l'erreur quadratique suivante:

$$e^2 = \left\|e(t+1)\right\|^2 = \left\|S(t+1-\tau) - D_w(t+1)\right\|^2$$

on peut prévoir de déterminer les valeurs de

$$\frac{\partial D_w^{\bullet}(t+1)}{\partial \lambda_a(t+1)}$$

et

$$\frac{\partial D_w^{\bullet}(t+1)}{\partial \lambda_\varphi(t+1)}$$

qui représentent les dérivées du conjugué du signal à émettre respectivement par rapport à $\lambda_a$ et $\lambda_\varphi$.

A cet effet, on écrit, en respectant les règles de dérivation par rapport à une variable complexe, les équations suivantes :

$$\frac{\partial \dot{D}_w^{\cdot}(t+1)}{\partial \lambda_a(t+1)} = \frac{\partial \dot{D}_w^{\cdot}(t+1)}{\partial S'^{\cdot}(t+1)} \cdot \frac{\partial S'^{\cdot}(t+1)}{\partial \lambda_a(t+1)}$$

et

$$\frac{\partial \dot{D}_w^{\cdot}(t+1)}{\partial \lambda_\varphi(t+1)} = \frac{\partial \dot{D}_w^{\cdot}(t+1)}{\partial S'^{\cdot}(t+1)} \cdot \frac{\partial S'^{\cdot}(t+1)}{\partial \lambda_\varphi(t+1)}$$

En effectuant l'approximation suivante de la dérivée de la sortie de l'amplificateur de puissance par son entrée. Il s'agit ici d'une approximation car, on ne connaît pas en général la réponse précise de l'amplificateur de puissance, notamment lorsque celui-ci travaille dans une zone non linéaire.

L'approximation suit l'équation suivante :

$$\frac{\partial \dot{D}_w^{\cdot}(t+1)}{\partial S^{\cdot}(t+1)} \approx \frac{\dot{D}_w^{\cdot}(t+1)}{S^{\cdot}(t+1)} \qquad (1)$$

on peut écrire l'équation qui suit :

$$\frac{\partial \dot{D}_u^{\cdot}(t+1)}{\partial \lambda_u(t+1)} \approx \frac{\dot{D}_w^{\cdot}(t+1)}{S'^{\cdot}(t+1)} \cdot \frac{\partial S'^{\cdot}(t+1)}{\partial \lambda_u(t+1)}$$

Le gradient pour $\lambda_a$ peut alors vérifier l'équation suivante, dans laquelle le gradient et l'erreur quadratique sont des nombres réels :

$$\lambda_a(t+1) = \lambda_a(t) + \mu_a . \mathrm{Re}\left( e(t+1) . \frac{\dot{D}_w^{\cdot}(t+1)}{a(t-(\tau-\tau_1))} . (a(t-\tau) - a(t)) \right)$$

De la même manière pour $\lambda_\varphi$, on peut écrire l'équation suivante :

$$\frac{\partial \dot{D}_w^{\cdot}(t+1)}{\partial \lambda_\varphi(t+1)} \approx -j . \dot{D}_w^{\cdot}(t+1) . (\varphi(t-\tau) - \varphi(t))$$

Le gradient pour $\lambda_\varphi$ vérifie l'équation suivante, dans laquelle le gradient et l'erreur quadratique sont des nombre réels :

$$\lambda_\varphi(t+1) = \lambda_\varphi(t) + \mu_\varphi . \mathrm{Im}\left( e(t+1) . \dot{D}_w^{\cdot}(t+1) . (\varphi(t-\tau) - \varphi(t)) \right)$$

Afin d'augmenter la stabilité de l'algorithme du gradient et d'en accélérer la convergence, on peut avantageusement limiter la plage d'excursion de $\lambda_a$ et $\lambda_\varphi$ entre 0 et 1 au cours de l'exécution de l'algorithme.

On peut également avantageusement initialiser $\lambda_a$ à une valeur quelconque comprise entre 0 et 1. On peut de même avantageusement initialiser $\lambda_F$ à une valeur quelconque comprise entre 0 et 1.

Les performances obtenues dans un tel mode de réalisation dépendent de la précision de l'approximation linéaire effectuée. Il convient de noter que cette précision peut être augmentée lorsque la fréquence du signal sur la liaison de retour 208 est relativement grande.

On peut également prévoir d'obtenir les valeurs $\lambda_a$ et $\lambda_\varphi$ par une autre méthode que celle qui consiste à interpoler de façon linéaire les composantes de phase et d'amplitude du signal. On peut notamment à cet effet utiliser une méthode d'interpolation au moyen d'une fonction sinus cardinale, en utilisant les valeurs $\lambda_a$ et $\lambda_\varphi$ déjà obtenues.

On peut ainsi améliorer les performances de l'interpolation tout en maintenant une faible complexité pour estimer les retards et tout en gardant une très bonne rapidité de convergence.

Il est également possible de ne remettre à jour que de temps en temps, par exemple toutes les trames, les paramètres $\lambda_a$ et $\lambda_\varphi$ appliqués au signal à transmettre. Par contre une valeur courante de ces paramètres doit être calculée de façon plus rapide pour permettre la convergence de l'algorithme du gradient.

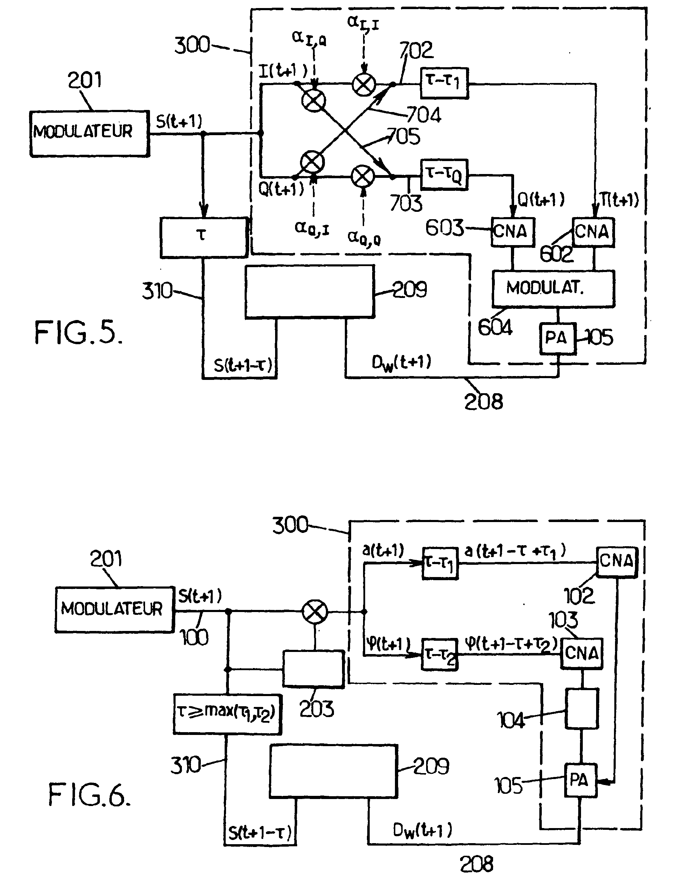

La figure 5 illustre une mise en oeuvre d'une correction de distorsion selon un mode de réalisation de la présente invention dans une architecture de chaîne d'émission incluant une décomposition de signal en quadrature de phase telle qu'illustrée à la figure 2.

Dans une telle architecture, des principes de correction similaires à ceux énoncés en référence aux figures 3 et 4, sont ici appliqués.

Les sections suivantes décrivent un mode de réalisation de la présente invention appliqué à une architecture dans laquelle le signal traité par la chaîne d'émission considérée est décomposé en des première et seconde composantes de modulation d'amplitude en quadrature, tel que cela est illustré à la figure 2.

Les sections suivantes décrivent un mode de réalisation de la présente invention dans lequel sont pris en compte les défauts suivants dans l'architecture décrite ci-avant :

- un retard relatif entre les voies I et Q ;
- un défaut de balance ; et
- un défaut de quadrature.

La figure 5 illustre une mise en oeuvre de la présente invention dans une architecture de chaîne d'émission telle qu'illustrée en figure 2.

Un modulateur 201 fournit un signal S(t+1). On décompose ce signal en deux composantes en quadrature respectivement I et Q. On note $\tau_I$ le retard subi par la première composante de signal et $\tau_Q$ le retard subi par la seconde composante de signal.

Sur une première voie de correction 702, on applique à la composante I(t+1) un premier coefficient pondérant de correction $\alpha_{I,I}$. Puis, on retarde le signal ainsi obtenu d'un retard $\tau$-$\tau_1$.

Une liaison de mixage 704 relie la seconde voie de correction 703 à la première voie de correction 702 de telle sorte que la seconde composante Q(t+1) est mixée à la première composante I(t+1) après qu'un deuxième coefficient pondérant de correction $\alpha_{Q,I}$ ait été appliquée à cette seconde composante Q(t+1).

Ainsi, on injecte sur cette première voie de correction 702, après l'application du premier coefficient pondérant de correction, la seconde composante de signal Q(t+1) à laquelle a été appliquée ce deuxième coefficient pondérant de correction $\alpha_{Q,I}$ via la première voie de mixage 704. Puis, la composante de signal I'(t+1) obtenue alors sur cette première voie de correction, après application d'un retard de $\tau$-$\tau_I$ est fournie au premier convertisseur numérique-analogique.

On applique sur la seconde composante de signal Q(t+1) un troisième coefficient pondérant de correction $\alpha_{Q,Q}$.

Il est prévu une seconde liaison de mixage 705 qui est adaptée pour fournir la première composante de signal I(t+1) à laquelle a été appliqué un quatrième coefficient pondérant de correction $\alpha_{I,Q}$ sur la seconde voie de correction après que le troisième coefficient pondérant de correction ait été appliqué à la seconde composante de signal Q(t+1). On applique ensuite au signal Q'(t+1) ainsi obtenu un retard $\tau$-$\tau_Q$.

Ainsi, de manière symétrique à la première voie de correction, on injecte sur cette seconde voie de correction 703, après l'application du troisième coefficient pondérant de correction, la seconde composante de signal Q(t+1) à laquelle a été appliqué ce quatrième coefficient pondérant de correction $\alpha_{Q,1}$ via la seconde voie de mixage 705. Puis, la composante de signal Q'(t+1) obtenue alors sur cette seconde voie de correction 703 est fournie, après application d'un retard $\tau$-$\tau_Q$ au second convertisseur numérique-analogique.

Ainsi, le signal modulé S(t+1) est divisé en deux composantes en quadrature I(t+1) et Q(t+1), et vérifie l'équation suivante :

$$S(t+1) = I(t+1) + j.Q(t+1)$$

Les défauts de mauvaise balance et de mauvaise quadrature peuvent ainsi être corrigés au moyen des coefficients pondérant de correction $\alpha_{I,I}$, $\alpha_{Q,Q}$, $\alpha_{I,Q}$ et $\alpha_{Q,I}$, des valeurs respectives de ces coefficients étant déterminées sur la base d'une comparaison du signal d'entrée retardé $S(t+1-\tau)$ et du signal émis en sortie de l'amplificateur de puissance et vu à travers une voie de retour.

Une fois que les défauts de mauvaise balance et de mauvaise quadrature sont corrigés, ainsi que lorsque les retards ont été appliqués sur ces deux composantes de façon à les synchroniser entre elles et avec le signal d'entrée $S(t+1-\tau)$, sur les première et seconde composante de signal I et Q, on obtient alors la première composante de signal corrigée I'(t+1) et la seconde composante de signal corrigée Q'(t+1) vérifiant les équations suivantes respectivement :

$$I'(t+1) = \alpha_{I,I}.I(t+1-(\tau - \tau_I)) + \alpha_{Q,I}.Q(t+1-(\tau - \tau_I))$$

et

$$Q'(t+1) = \alpha_{I,Q}.I(t+1-(\tau - \tau_Q)) + \alpha_{Q,Q}.Q(t+1-(\tau - \tau_Q))$$

Le signal modulé corrigé selon un mode de réalisation de la présente invention vérifie de ce fait l'équation suivante :

$$S'(t+1) = I'(t+1) + j.Q'(t+1)$$

Les valeurs des retards induites sur les deux composantes de signal $\tau_I$, $\tau_Q$, et les valeurs de coefficients pondérant de correction $\alpha_{I,I}$, $\alpha_{Q,Q}$, $\alpha_{I,Q}$ et $\alpha_{Q,I}$ peuvent être obtenues par différentes méthodes.

On peut par exemple estimer ces valeurs de $\tau_I$, $\tau_Q$, et de $\alpha_{I,I}$, $\alpha_{Q,Q}$, $\alpha_{I,Q}$ et $\alpha_{Q,I}$ en mettant en oeuvre un algorithme du gradient. Dans ce cas, comme cela est décrit ci-avant dans le contexte d'une décomposition de signal en une composante d'amplitude et en une composante de phase, on peut utiliser une interpolation linéaire pour effectuer un décalage temporel afin de déterminer des paramètres d'interpolation correspondant aux valeurs des retards $\tau$-$\tau_I$ et $\tau$-$\tau_Q$.

On estime alors des paramètres d'interpolation $\lambda_I$ et $\lambda_Q$ respectivement pour l'interpolation temporelle correspondant au premier retard de correction $\tau$-$\tau_I$ pour la première composante de signal I et correspondant au second retard de correction $\tau$-$\tau_Q$ pour la seconde composante de signal Q.

A la convergence de l'algorithme on a:

$$\lambda_I \approx (\tau - \tau_I)\big/\tau$$

et

$$\lambda_Q \approx (\tau - \tau_Q)\big/\tau .$$

Pour minimiser, en fonction de $\lambda_I$, $\lambda_Q$, $\alpha_{I,I}$, $\alpha_{Q,Q}$, $\alpha_{I,Q}$ et $\alpha_{Q,I}$, la valeur de l'erreur quadratique suivante:

$$e^2 = \|e(t+1)\|^2 = \|S(t+1-\tau) - D_w(t+1)\|^2,$$

9

on peut déterminer en premier lieu : $\dfrac{\partial D_w^{\bullet}(t+1)}{\partial \lambda_I(t+1)}$ et $\dfrac{\partial D_w^{\bullet}(t+1)}{\partial \lambda_Q(t+1)}$ :

Ainsi, on obtient les équations suivantes respectives :

$$\frac{\partial D_w^{\bullet}(t+1)}{\partial \lambda_I(t+1)} = \frac{\partial D_w^{\bullet}(t+1)}{\partial S^{\bullet}(t+1)} \cdot \frac{\partial S^{\bullet}(t+1)}{\partial \lambda_I(t+1)}$$

et

$$\frac{\partial D_w^{\bullet}(t+1)}{\partial \lambda_Q(t+1)} = \frac{\partial D_w^{\bullet}(t+1)}{\partial S^{\bullet}(t+1)} \cdot \frac{\partial S^{\bullet}(t+1)}{\partial \lambda_Q(t+1)}$$

En effectuant la même approximation que celle obtenue à l'équation [1], on obtient l'équation suivante :

$$\frac{\partial D_w^{\bullet}(t+1)}{\partial \lambda_I(t+1)} \approx \frac{D_w^{\bullet}(t+1)}{S^{\bullet}(t+1)} \cdot \frac{\partial S^{\bullet}(t+1)}{\partial \lambda_I(t+1)}$$

On peut donc écrire par conséquent :

$$\frac{\partial D_w^{\bullet}(t+1)}{\partial \lambda_I(t+1)} \approx \frac{D_w^{\bullet}(t+1)}{S^{\bullet}(t+1)} \Big(\alpha_{I,I}.\big(I(t+1-\tau)-I(t+1)\big)+\alpha_{Q,I}.\big(Q(t+1-\tau)-Q(t+1)\big)\Big)$$

et

$$\frac{\partial D_w^{\bullet}(t+1)}{\partial \lambda_Q(t+1)} \approx \frac{D_w^{\bullet}(t+1)}{S^{\bullet}(t+1)}.(-j).\Big(\alpha_{I,Q}.\big(I(t+1-\tau)-I(t+1)\big)+\alpha_{Q,Q}.\big(Q(t+1-\tau)-Q(t+1)\big)\Big)$$

On peut alors obtenir une expression du gradient, $\lambda_I$ et l'erreur quadratique étant une valeur réelle, sous la forme :

$$\lambda_I(t+1) = \lambda_I(t) + \mu_I.\mathrm{Re}\!\left(e(t+1).\frac{D_w^{\bullet}(t+1)}{S^{\bullet}(t+1)}.\big(I'(t+1-\tau)-I'(t+1)\big)\right)$$

où $\mu_I$ est le pas du gradient pour $\lambda_I$.

De la même manière pour $\lambda_Q$, qui est une valeur réelle, et du fait que l'erreur quadratique est également un nombre réel, on a :

$$\lambda_Q(t+1) = \lambda_Q(t) + \mu_Q.\mathrm{Im}\!\left(e(t+1).\frac{D_w^{\bullet}(t+1)}{S^{\bullet}(t+1)}.\big(Q'(t+1-\tau)-Q'(t+1)\big)\right)$$

où $\mu_Q$ est le pas du gradient pour $\lambda_Q$.

En procédant de même relativement aux coefficients pondérant de correction $\alpha_{I,I}$, $\alpha_{Q,Q}$, $\alpha_{I,Q}$ et $\alpha_{Q,I}$, on obtient les expressions du gradient suivantes :

$$\alpha_{I,I}(t+1) = \alpha_{I,I}(t) + \mu_{I,I}.\mathrm{Re}\left( e(t+1).\frac{D_w^\bullet(t+1)}{S^\bullet(t+1)}.((1-\lambda_I)J(t+1) + \lambda_I.J(t+1-\tau)) \right)$$

$$\alpha_{Q,I}(t+1) = \alpha_{Q,I}(t) + \mu_{Q,I}.\mathrm{Re}\left( e(t+1).\frac{D_w^\bullet(t+1)}{S^\bullet(t+1)}.((1-\lambda_I)Q(t+1) + \lambda_I.Q(t+1-\tau)) \right)$$

$$\alpha_{I,Q}(t+1) = \alpha_{I,Q}(t) + \mu_{I,Q}.\mathrm{Im}\left( e(t+1).\frac{D_w^\bullet(t+1)}{S^\bullet(t+1)}.((1-\lambda_Q)J(t+1) + \lambda_Q.J(t+1-\tau)) \right)$$

$$\alpha_{Q,Q}(t+1) = \alpha_{Q,Q}(t) + \mu_{Q,Q}.\mathrm{Im}\left( e(t+1).\frac{D_w^\bullet(t+1)}{S^\bullet(t+1)}.((1-\lambda_Q)Q(t+1) + \lambda_Q.Q(t+1-\tau)) \right)$$

où $\mu_{I,I}$, $\mu_{Q,Q}$, $\mu_{I,Q}$, $\mu_{Q,I}$ sont respectivement les pas du gradient pour $\alpha_{I,I}$, $\alpha_{Q,Q}$, $\alpha_{I,Q}$ et $\alpha_{Q,I}$.

Il peut être avantageux de prévoir de ne mettre à jour les paramètres $\lambda_I$, $\lambda_Q$, $\alpha_{I,I}$, $\alpha_{Q,Q}$, $\alpha_{I,Q}$ et $\alpha_{Q,I}$ appliqués au signal à émettre uniquement de temps en temps, par exemple toutes les trames du signal à émettre si le signal à émettre est transmis par trames.

En revanche, il est préférable de déterminer une valeur courante de ces paramètres de façon plus fréquente que la mise à jour de ces paramètres afin de permettre une meilleure convergence de l'algorithme du gradient utilisé.

D'autres types d'architectures de la chaîne d'émission peuvent bien sûr être mis en oeuvre. D'une façon générale pour ces différents types d'architecture le même genre d'approche que celle décrite dans les exemples ci-dessus peut être utilisé.

Sur la base d'une connaissance de l'architecture d'une chaîne d'émission, on peut mettre en place une correction selon un mode de réalisation de la présente invention.

Dans une réalisation préférée de la présente innovation, ces paramètres sont estimés en mettant en oeuvre un algorithme du gradient.

Les paramètres de retard peuvent avantageusement être déterminés en les remplaçant par des paramètres d'interpolation linéaire, comme cela est exposé ci-avant.

Certaines chaînes d'émission ayant un amplificateur de puissance présentent une distorsion au regard de la linéarité du signal dans la plage de fonctionnement de l'amplificateur de puissance. En outre, afin d'augmenter le rendement de l'amplificateur de puissance, il est classiquement prévu de l'utiliser dans une zone de sa plage de fonctionnement qui est proche d'une zone de saturation. Or, cette distorsion est d'autant plus importante dans une telle zone de fonctionnement.

Une telle distorsion dégrade le spectre fréquentiel du signal émis et de ce fait peut perturber la transmission dans des canaux adjacents ('ACPR', pour 'Adjacent Channel Power Ratio' en anglais).

Il peut donc être avantageux, dans ce type de chaînes d'émission, de prévoir de corriger, outre les distorsions énoncées ci-avant, qui sont liées à une architecture de la chaîne d'émission, les distorsions qui sont elles liées au fonctionnement de l'amplificateur de puissance.

A cet effet, on prévoit de déterminer au niveau de l'unité de comparaison de signaux 209, dans les architectures selon un mode de réalisation de la présente invention telle qu'illustrées dans les figures 3 à 5, des paramètres de correction de ce type de distorsion sur la base d'une comparaison du signal d'entrée transmis sur la voie de transmission et du signal à émettre.

La figure 6 illustre une architecture de chaîne d'émission telle que celle illustrée dans la figure 3 dans laquelle, une unité de pré-distorsion 203 est en charge de pré distordre le signal avant qu'il ne soit traité par l'amplificateur de puissance en appliquant des paramètres de pré-distorsion.

Dans un mode de réalisation de la présente invention basé sur une décomposition du signal d'entrée en deux composantes, on peut prévoir d'appliquer la pré-distorsion en amont de cette décomposition, comme la figure 6 l'illustre.

En procédant ainsi, les distorsions induites par le traitement de l'amplificateur de puissance peuvent être anticipées sur le signal fourni à l'amplificateur de puissance de sorte que le signal amplifié à émettre en sortie de la chaîne d'émission ne présente pas d'altérations relatives à l'amplificateur de puissance. L'homme du métier connait des moyens adaptés pour fournir un tel signal modulé pré-distordu en entrée du module de décomposition 101.

**Revendications**

1. Procédé de traitement d'un signal dans une chaîne d'émission adaptée pour recevoir un signal d'entrée (100) et pour fournir un signal à émettre (208) ; ladite chaîne d'entrée comprenant un amplificateur de puissance ; ladite chaîne d'émission comprenant une voie de traitement (300) du signal d'entrée qui inclut une décomposition de signal numérique selon deux composantes de signal, une première composante d'amplitude et une seconde composante de phase, lesdites deux composantes de signal, d'une part, étant converties d'une forme numérique en une forme analogique et, d'autre part, suivant respectivement des voies physiques distinctes, **caractérisé en ce que** lesdites voies physiques induisant des premiers retards respectifs $\tau_1, \tau_2$ sur les deux composantes de signal ; ledit procédé comprenant les étapes suivantes :

   /a/ obtenir un signal d'entrée retardé en appliquant un second retard r ayant une valeur supérieure ou égale à la valeur maximale des premiers retards ;
   /b/ appliquer deux retards de correction $\tau-\tau_1$ et $\tau-\tau_2$ respectivement aux deux composantes de signal, cette étape étant réalisée sur la base d'une comparaison entre ledit signal d'entrée retardé du second retard $\tau$ et le signal à émettre ; et
   /c/ obtenir le signal à fournir à l'amplificateur de puissance en combinant les deux composantes de signal obtenues à l'issue de l'étape /b/.

2. Procédé de traitement d'un signal dans une chaîne d'émission adaptée pour recevoir un signal d'entrée (100) et pour fournir un signal à émettre (208) ; ladite chaîne d'entrée comprenant un amplificateur de puissance ;ladite chaîne d'émission comprenant une voie de traitement (300) du signal d'entrée qui inclut une décomposition de signal numérique selon deux composantes de signal, des première et seconde composantes en quadrature de phase, lesdites deux composantes de signal, d'une part, étant converties d'une forme numérique en une forme analogique et, d'autre part, suivant respectivement des voies physiques distinctes, lesdites voies physiques induisant des premiers retards respectifs "C1, $\tau_2$ sur les deux composantes de signal ; ledit procédé comprenant les étapes suivantes :

   /a/ obtenir un signal d'entrée retardé en appliquant un second retard r ayant une valeur supérieure ou égale à la valeur maximale des premiers retards ;
   /b/ appliquer deux retards de correction $\tau-\tau_1$ et $\tau-\tau_2$ respectivement aux deux composantes de signal, cette étape étant réalisée sur la base d'une comparaison entre ledit signal d'entrée retardé du second retard $\tau$ et le signal à émettre ; et
   /c/ obtenir le signal à fournir à l'amplificateur de puissance en combinant les deux composantes de signal obtenues à l'issue de l'étape /b/.

3. Procédé de traitement d'un signal selon la revendication 1 ou2, dans lequel les deux retards de correction $\tau-\tau_1$ et $\tau-\tau_2$ à appliquer respectivement sur les deux composantes de signal sont déterminés sur la base d'une comparaison entre ledit signal d'entrée retardé du second retard et le signal à émettre.

4. Procédé de traitement d'un signal selon la revendication 1 ou 2, dans lequel, à l'étape /b/, les retards sont appliqués en mettant en oeuvre une interpolation linéaire et dans lequel les coefficients d'interpolation linéaire sont estimés sur la base d'une comparaison entre le signal d'entrée retardé du second retard et le signal à émettre.

5. Procédé de traitement d'un signal selon la revendication 4, dans lequel les coefficients d'interpolation linéaire sont estimés au moyen d'un algorithme du gradient.

6. Chaîne de traitement d'un signal dans une chaîne d'émission adaptée pour recevoir un signal d'entrée (100) et pour fournir un signal à émettre (208) ; ladite chaîne d'émission comprenant :

   - une voie de traitement (300) du signal d'entrée, qui comprend un amplificateur de puissance (105), et qui inclut une décomposition de signal numérique selon deux composantes de signal, une première composante d'amplitude et une seconde composante de phase, lesdites deux composantes de signal, d'une part, étant converties d'une forme numérique en une forme analogique et, d'autre part, suivant respectivement des voies physiques distinctes, **caractérisé en ce que** lesdites voies physiques induisant des premiers retards respectifs $\tau_1$, $\tau_2$ sur les deux composantes de signal ;

- une voie de transmission de signal (310) adaptée pour retarder le signal d'entrée d'un second retard $\tau$ et transmettre le signal d'entrée retardé à une unité de comparaison (209), ledit second retard $\tau$ ayant une valeur supérieure ou égale à la valeur maximale des premiers retards ;

- une voie de retour qui transmet le signal à émettre (208) à ladite unité de comparaison (209) ;

dans laquelle un signal fourni à l'amplificateur de puissance correspond à un signal issu d'une combinaison des deux composantes de signal retardées respectivement de deux retards de correction $\tau$-$\tau_1$ et $\tau$.$\tau_2$, ledit signal fourni étant obtenu sur la base d'une comparaison entre ledit signal d'entrée retardé et le signal à émettre effectuée par l'unité de comparaison (209).

7. Chaîne de traitement d'un signal dans une chaîne d'émission adaptée pour recevoir un signal d'entrée (100) et pour fournir un signal à émettre (208) ; ladite chaîne d'émission comprenant :

- une voie de traitement (300) du signal d'entrée, qui comprend un amplificateur de puissance (105), **caractérisé en ce que** la voie de traitement inclut une décomposition de signal numérique selon deux composantes de signal, des première et seconde composantes en quadrature de phase, lesdites deux composantes de signal, d'une part, étant converties d'une forme numérique en une forme analogique et, d'autre part, suivant respectivement des voies physiques distinctes, et **en ce que** lesdites voies physiques induisant des premiers retards respectifs sur les deux composantes de signal ;

- la chaîne de transmission comprenant aussi une voie de transmission de signal (310) adaptée pour retarder le signal d'entrée d'un second retard $\tau$ et transmettre le signal d'entrée retardé à une unité de comparaison (209), ledit second retard r ayant une valeur supérieure ou égale à la valeur maximale des premiers retards ;

- une voie de retour qui transmet le signal à émettre (208) à ladite unité de comparaison (209) ;

dans laquelle un signal fourni à l'amplificateur de puissance correspond à un signal issu d'une combinaison des deux composantes de signal retardées respectivement de deux retards de correction $\tau$-$\tau_1$ et $\tau$-$\tau_2$, ledit signal fourni étant obtenu sur la base d'une comparaison entre ledit signal d'entrée retardé et le signal à émettre effectuée par l'unité de comparaison (209).

8. Chaine de traitement d'un signal selon la revendication 6 ou 7, dans laquelle l'unité de comparaison (209) est en outre adaptée pour déterminer les deux retards de correction $\tau$-$\tau_1$ et $\tau$-$\tau_2$ à appliquer respectivement sur les deux composantes de signal sur la base d'une comparaison entre ledit signal d'entrée retardé du second retard et le signal à émettre.

9. Chaine de traitement d'un signal selon la revendication 6 ou 7, dans laquelle l'unité de comparaison (209) est en outre adaptée pour estimer des coefficients d'interpolation linéaire, l'application des deux retards de correction $\tau$-$\tau_1$ et $\tau$-$\tau_2$ respectivement sur les deux composantes de signal étant basée sur lesdits coefficients d'interpolation linéaire.

10. Chaîne de traitement d'un signal selon la revendication 9, dans lequel les coefficients d'interpolation linéaire sont déterminés au moyen d'un algorithme du gradient.

**Claims**

1. Method of processing a signal in an emission chain suitable for receiving an input signal (100) and for providing a signal to be emitted (208); said input chain comprising a power amplifier; said emission chain comprising a processing pathway (300) for the input signal which includes a digital signal decomposition according to two signal components, a first amplitude component and a second phase component, said two signal components, on the one hand, being converted from a digital form into an analogical form and, on the other hand, following respectively distinct physical pathways, **characterized in that** said physical pathways inducing first respective delays "$\tau_1$, $\tau_2$ on the two signal components;

said method comprising the following steps:

/a/ obtaining a delayed input signal by applying a second delay r having a value greater than or equal to the maximum value of the first delays;

/b/ applying two corrections delays $\tau$-$\tau_1$ et $\tau$-$\tau_2$ respectively to the two signal components, this step being carried out on the basis of a comparison between said input signal delayed by the second delay $\tau$ and the signal to be emitted; and

/c/ obtaining the signal to be provided to the power amplifier by combining the two signal components obtained on completion of step /b/.

2. Method of processing a signal in an emission chain suitable for receiving an input signal (100) and for providing a signal to be emitted (208); said input chain comprising a power amplifier; said emission chain comprising a processing pathway (300) for the input signal which includes a digital signal decomposition according to two signal components, a first and second phase quadrature components, said two signal components, on the one hand, being converted from a digital form into an analogical form and, on the other hand, following respectively distinct physical pathways, **characterized in that** said physical pathways inducing first respective delays $\tau_1$, $\tau_2$ on the two signal components; said method comprising the following steps:

/a/ obtaining a delayed input signal by applying a second delay $\tau$ having a value greater than or equal to the maximum value of the first delays;

/b/ applying two corrections delays $\tau$-$\tau_1$, and $\tau$-$\tau_2$ respectively to the two signal components, this step being carried out on the basis of a comparison between said input signal delayed by the second delays $\tau$ and the signal to be emitted; and

/c/ obtaining the signal to be provided to the power amplifier by combining the two signal components obtained on completion of step /b/.

3. Method of processing a signal according to claim 1 or 2, in which the two correction delays $\tau$-$\tau_1$ and $\tau$-$\tau_2$ to be applied respectively to the two signal components are determined on the basis of a comparison between said input signal delayed by the second delay and the signal to be emitted.

4. Method of processing a signal according to claim 1 or 2, in which, in step /b/, the delays are applied by implementing a linear interpolation and in which the linear interpolation coefficients are estimated on the basis of a comparison between the input signal delayed by the second delay and the signal to be emitted.

5. Method of processing a signal according to claim 4, in which the linear interpolation coefficients are estimated by means of a gradient algorithm.

6. Chain for processing a signal in an emission chain suitable for receiving an input signal (100) and for providing a signal to be emitted (208); said emission chain comprising :

- a processing pathway (300) for the input signal, which includes a power amplifier (105), and which includes a digital signal decomposition according to two signal components, a first amplitude component and a second phase component, said two signal components, on the one hand, being converted from a digital form into an analogical form and, on the other hand, following respectively distinct physical pathways, **characterized in that** said physical pathways inducing first respective delays $\tau_1$, $\tau_2$ on the two signal components;
- a signal transmission pathway (310) suitable for delaying the input signal by applying a second delay r and for transmitting the delayed input signal to a comparison unit (209), said second delay r having a value greater than or equal to the maximum value of the first delays;
- a return pathway which transmits the signal to be emitted (208) to said comparison unit (209) ;

in which a signal provided to the power amplifier corresponds to a signal arising from a combination of the two signal components delayed respectively by two correction delays $\tau$-$\tau_1$, et $\tau$-$\tau_2$, said signal provided being obtained on the basis of a comparison between said delayed input signal and the signal to be emitted, performed by the comparison unit (209).

7. Chain for processing a signal in an emission chain suitable for receiving an input signal (100) and for providing a signal to be emitted (208); said emission chain comprising :

- a processing pathway (300) for the input signal which includes a power amplifier (105), **characterized in that** the processing pathway includes a digital signal decomposition according to two signal components, a first and second phase quadrature components, said two signal components, on the one hand, being converted from a digital form into an analogical form and, on the other hand, following respectively distinct physical pathways, and **in that** said physical pathways inducing first respective delays $\tau_1$, $\tau_2$ on the two signal components;
- the chain for processing also comprising a signal transmission pathway (310) suitable for delaying the input signal by applying a second delay $\tau$ and for transmitting the delayed input signal to a comparison unit (209), said second delay r having a value greater than or equal to the maximum value of the first delays;
- a return pathway which transmits the signal to be emitted (208) to said comparison unit (209) ;

in which a signal provided to the power amplifier corresponds to a signal arising from a combination of the two signal components delayed respectively by two correction delays $\tau-\tau_1$ et $\tau-\tau_2$, said signal provided being obtained on the basis of a comparison between said delayed input signal and the signal to be emitted, performed by the comparison unit (209).

8. Chain for processing a signal according to claim 6 or 7, in which the comparison unit (209) is moreover suitable for determining the two correction delays $\tau-\tau_1$ and $\tau-\tau_2$ to be applied respectively to the two signal components on the basis of a comparison between said input signal delayed by the second delay and the signal to be emitted.

9. Chain for processing a signal according to claim 6 or 7, in which the comparison unit (209) is moreover suitable for estimating linear interpolation coefficients, the application of the two correction delays $\tau-\tau_1$ and $\tau-\tau_2$ respectively to the two signal components being based on said linear interpolation coefficients.

10. Chain for processing a signal according to claim 9, in which the linear interpolation coefficients are estimated by means of a gradient algorithm.

**Patentansprüche**

1. Verfahren zur Verarbeitung eines Signals in einem Sendezweig, der dazu geeignet ist, um ein Eingangssignal (100) zu empfangen und ein zu sendendes Signal (208) zu liefern; wobei der genannte Eingangszweig einen Leistungsverstärker umfasst, wobei der genannte Sendezweig eine Bearbeitungsstrecke (300) des Eingangssignals umfasst, die eine Zerlegung des digitalen Signals gemäß zwei Signalkomponenten, eine erste Amplitudekomponente und eine zweite Phasekomponente einschließt; wobei die zwei Signalkomponenten einerseits von einer digitalen in eine analogische Form umgesetzt werden und andererseits jeweils zwei unterschiedliche physische Strecken folgen, **dadurch gekennzeichnet, dass** die genannten physischen Strecken erste jeweilige Verzögerungen $\tau_1$, $\tau_2$, auf den zwei Signalkomponenten bewirken;
wobei das genannte Verfahren die folgenden Schritte umfasst:

/a/ durch Anlegen einer zweiten Verzögerung mit einem Wert größer oder gleich dem Maximalwert der ersten Verzögerungen, ein verzögertes Eingangssignal erreichen $\tau$ ;
/b/ jeweils an die zwei Signalkomponenten zwei Korrekturverzögerungen $\tau-\tau_1$ und $\tau-\tau_2$ anlegen, wobei dieser Schritt auf Grundlage eines Vergleichs des um die zweite Verzögerung $\tau$ verzögerten Eingangssignals mit dem zu sendenden Signal erfolgt; und
/c/ das dem Leistungsverstärker zu liefernde Signal durch Kombination der nach Abschluss von Schritt /b/ erhaltenen Signalkomponenten erhalten.

2. Verfahren zur Verarbeitung eines Signals in einem Sendezweig, der dazu geeignet ist, um ein Eingangssignal (100) zu empfangen und ein zu sendendes Signal (208) zu liefern; wobei der genannte Eingangszweig einen Leistungsverstärker umfasst, wobei der genannte Sendezweig eine Bearbeitungsstrecke (300) des Eingangssignals umfasst, die eine Zerlegung des digitalen Signals gemäß zwei Signalkomponenten, erste und zweite Phasenquadraturkomponenten einschließt, wobei die zwei Signalkomponenten einerseits von einer digitalen in eine analogische Form umgesetzt werden und andererseits jeweils zwei unterschiedliche physische Strecken folgen, wobei die genannten physischen Strecken erste jeweilige Verzögerungen $\tau_1$, $\tau_2$ auf den zwei Signalkomponenten bewirken;
wobei das genannte Verfahren die folgenden Schritte umfasst:

/a/ durch Anlegen einer zweiten Verzögerung mit einem Wert größer oder gleich dem Maximalwert der ersten Verzögerungen, ein verzögertes Eingangssignal erreichen $\tau$ ;
/b/ jeweils an die zwei Signalkomponenten zwei Korrekturverzögerungen $\tau-\tau_1$ $\tau-\tau_2$ anlegen, wobei dieser Schritt auf Grundlage eines Vergleichs des um die zweite Verzögerung $\tau$ verzögerten Eingangssignals mit dem zu sendenden Signal erfolgt; und

/c/ das dem Leistungsverstärker zu liefernde Signal durch Kombination der nach Abschluss von Schritt /b/ erhaltenen Signalkomponenten erhalten.

3. Verfahren zur Verarbeitung eines Signals gemäß Anspruch 1 oder 2, bei welchem die zwei jeweilig an die zwei Signalkomponenten anzulegenden Korrekturverzögerungen $\tau-\tau_1$ und $\tau-\tau_2$ auf Grundlage des Vergleichs des um die zweite Verzögerung verzögerten Eingangssignals und mit dem zu sendenden Signals festgelegt werden.

4. Verfahren zur Verarbeitung eines Signals gemäß Anspruch 1 oder 2,bei welchem, in Schritt /b/, die Verzögerungen durch Einsatz einer linearen Interpolation angelegt werden und bei welchem die linearen Interpolationsfaktoren auf Grundlage des Vergleichs des um die zweite Verzögerung verzögerten Eingangssignals mit dem zu sendenden Signal bewertet werden.

5. Verfahren zur Verarbeitung eines Signals gemäß Anspruch 4, bei welchem die linearen Interpolationsfaktoren mithilfe eines Gradientalgorithmus bewertet werden.

6. Signalverarbeitungszweig in einem Sendezweig, der dazu geeignet ist, um ein Eingangssignal (100) zu empfangen und ein zu sendendes Signal (208) zu liefern (100);
der genannte Sendezweig umfassend:

- eine Verarbeitungsstrecke (300) des Eingangssignals, die einen Leistungsverstärker (105) umfasst und die eine Zerlegung des digitalen Signals gemäß zwei Signalkomponenten, eine erste Amplitudekomponente und eine zweite Phasekomponente einschließt; wobei die zwei Signalkomponenten einerseits von einer digitalen in eine analogische Form umgesetzt werden und andererseits jeweils zwei unterschiedliche physische Strecken folgen, **dadurch gekennzeichnet, dass** die genannten physischen Strecken erste jeweilige Verzögerungen $\tau_1$, $\tau_2$ auf den Signalkomponenten bewirken;
- eine Signalübertragungsstrecke (310), die dazu geeignet ist, um das Eingangssignal um eine zweite Verzögerung $\tau$ zu verzögern und das verzögerte Eingangssignal an eine Vergleichseinheit (209) zu übertragen, wobei die zweite Verzögerung $\tau$ einen Wert aufweist, der größer oder gleich dem Maximalwert der ersten Verzögerungen ist;
- eine Rückkehrstrecke, die das zu sendende Signal (208) an die genannte Vergleichseinheit (209) übertragt;

in welcher ein dem Leistungsverstärker geliefertes Signal einem aus der Kombination von zwei jeweils um die zwei Korrekturverzögerungen $\tau-\tau_1$ und $\tau-\tau_2$, verzögerten Signalkomponenten entstandenen Signal entspricht, wobei das genannte gelieferte Signal auf Grundlage eines Vergleichs durch die Vergleichseinheit des genannten verzögerten Eingangssignals mit dem zu sendenden Signal (209) erhalten wird.

7. Signalverarbeitungszweig in einem Sendezweig, der dazu geeignet ist, um ein Eingangssignal (100) zu empfangen und ein zu sendendes Signal (208) zu liefern (100);
der genannte Sendezweig umfassend:

- eine Verarbeitungsstrecke (300) des Eingangssignals, die einen Leistungsverstärker (105) umfasst, **dadurch gekennzeichnet, dass** die Verarbeitungsstrecke eine Zerlegung des digitalen Signals in zwei Signalkomponenten, erste und zweite Phasenquadraturkomponenten einschließt; wobei die zwei Signalkomponenten einerseits von einer digitalen in eine analogische Form umgesetzt werden und andererseits jeweils zwei unterschiedliche physische Strecken folgen, und dass die genannten physischen Strecken erste jeweilige Verzögerungen auf den zwei Signalkomponenten bewirken;
- wobei der übertragungszweig auch eine Signalübertragungsstrecke (310) umfasst, die dazu geeignet ist, um das Eingangssignal um eine zweite Verzögerung $\tau$ zu verzögern und das verzögerte Eingangssignal an eine Vergleichseinheit (209) zu übertragen, wobei die zweite Verzögerung $\tau$ einen Wert aufweist, der größer oder gleich dem Maximalwert der ersten Verzögerungen ist;
- eine Rückkehrstrecke, die das zu sendende Signal (208) an die genannte Vergleichseinheit (209) übertragt;

in welcher ein dem Leistungsverstärker geliefertes Signal einem aus der Kombination von zwei jeweils um die zwei Korrekturverzögerungen $\tau-\tau_1$ und $\tau-\tau_2$ , verzögerten Signalkomponenten entstandenen Signal entspricht, wobei das genannte gelieferte Signal auf Grundlage eines Vergleichs durch die Vergleichseinheit des genannten verzögerten Eingangssignals mit dem zu sendenden Signal (209) erhalten wird.

**8.** Verarbeitungszweig eines Signals gemäß Anspruch 6 oder 7, in welcher die Vergleichseinheit (209) außerdem dazu geeignet ist, um die jeweils an die zwei Signalkomponenten anzulegenden Korrekturverzögerungen $\tau$-$\tau_1$ und $\tau$-$\tau_2$ auf Grundlage eines Vergleichs des um die zweite Verzögerung verzögerten Eingangssignals mit dem zu sendenden Signal festzulegen.

**9.** Verarbeitungszweig eines Signals gemäß Anspruch 6 oder 7, in welchem die Vergleichseinheit (209) außerdem dazu geeignet ist, um die linearen Interpolationsfaktoren zu bewerten, wobei das Anlegen der zwei Korrekturverzögerungen $\tau$-$\tau_1$ und $\tau$-$\tau_2$ jeweils an die zwei Signalkomponenten auf Grundlage der genannten linearen Interpolationsfaktoren erfolgt.

**10.** Verarbeitungszweig eines Signals gemäß Anspruch 9, bei welchem die linearen Interpolationsfaktoren mithilfe eines Gradientalgorithmus bewertet werden.

FIG.1.

FIG.2.

FIG.3.

FIG.4.

FIG.5.

FIG.6.

**EP 2 028 810 B1**

**RÉFÉRENCES CITÉES DANS LA DESCRIPTION**

**Documents brevets cités dans la description**

- EP 1808959 A